Europäisches Patentamt

European Patent Office

Office européen des brevets

(11) Veröffentlichungsnummer: **0 078 394**
**A1**

## (12) EUROPÄISCHE PATENTANMELDUNG

(21) Anmeldenummer: 82108681.6

(22) Anmeldetag: 20.09.82

(51) Int. Cl.³: **H 02 P 3/14, H 02 P 6/02**

(30) Priorität: 05.10.81 DE 3139546

(71) Anmelder: **SIEMENS AKTIENGESELLSCHAFT, Berlin und München Wittelsbacherplatz 2, D-8000 München 2 (DE)**

(43) Veröffentlichungstag der Anmeldung: **11.05.83 Patentblatt 83/19**

(84) Benannte Vertragsstaaten: **AT DE FR GB IT**

(72) Erfinder: **Leitgeb, Wilhelm, Dr. Dipl.-Ing., Martin-Luther-Strasse 26, D-8740 Bad Neustadt (DE)**

(54) Vier-Quadrantensteller zur Steuerung einer kollektorlosen Gleichstrommaschine.

(57) Die Erfindung betrifft einen Vier-Quadrantensteller zur Steuerung einer kollektorlosen Gleichstrommaschine. Der Vier-Quadrantensteller weist eine aus in Brückenschaltung angeordneten Halbleiterschaltelementen (1 bis 6) bestehende Kommutierungseinrichtung auf, an die die Wicklungsstränge (7 bis 9) der Ständerwicklung einer Gleichstrommaschine angeschlossen sind. Zu den Halbleiterschaltelementen ist eine ebenfalls an die Ständerwicklung der Gleichstrommaschine angeschlossene Gleichrichterbrücke (11 bis 16) antiparallelgeschaltet. Der eine Gleichspannungspol der Gleichrichterbrücke ist mit dem entsprechenden Eingangspol (−) des Vier-Quadrantenstellers direkt verbunden. Zwischen den beiden Eingangspolen (+ und −) des Vier-Quadrantenstellers liegt ein Speicherkondensator (20). Um einen möglichst hohen Anteil der Bremsenergie wieder rückgewinnen zu können, wird vorgeschlagen, dass an die beiden Gleichspannungspole der Gleichrichterbrücke (11 bis 16) ein periodisch auf- und zusteuerbares Halbleiterstellelement (17) angeschlossen und der Verbindungspunkt (18) des Halbleiterstellelementes (17) mit dem anderen Gleichspannungspol der Gleichrichterbrücke (11 bis 16) über eine Entkopplungsdiode (19) an den anderen Eingangspol (+) des Vier-Quadrantenstellers angeschlossen ist.

SIEMENS AKTIENGESELLSCHAFT
Berlin und München

0078394

Unser Zeichen
VPA 81 P 3 1 6 6 E

Vier-Quadrantensteller zur Steuerung einer kollektorlosen
Gleichstrommaschine

Die Erfindung betrifft einen Vier-Quadrantensteller zur
Steuerung einer kollektorlosen Gleichstrommaschine gemäß
dem Oberbegriff des Patentanspruchs 1.

Ein solcher Vier-Quadrantensteller ist durch die
DE-OS 28 34 523 bekannt. Eine Energierückgewinnung während
des Bremsbetriebes eines an dem Steller angeschlossenen
Gleichstrommotors ist mit diesem Vier-Quadrantensteller nur
in geringem Umfang möglich. Der am Eingang des Stellers
liegende Speicherkondensator kann nur in der kurzen Zeitspanne aufgeladen werden, in der die an der Wicklungsinduktivität auftretende Selbstinduktionsspannung höher
als die Spannung am Kondensator ist.

Der Erfindung liegt die Aufgabe zugrunde, einen Vier-
Quadrantensteller der eingangs beschriebenen Art so auszubilden, daß ein möglichst großer Teil der Bremsenergie
zurückgewonnen werden kann.

Die Lösung der gestellten Aufgabe gelingt durch die im
Kennzeichen des Anspruches 1 angegebenen Merkmale. Durch
das Aufsteuern des an die Gleichspannungspole der Gleichrichterbrücke angeschlossenen Halbleiterstellelementes wird
die Ständerwicklung des Motors kurzgeschlossen und es fließt
ein hoher Kurzschlußstrom. Dieser hohe Kurzschlußstrom wird
beim Zusteuern des Halbleiterstellelementes von der Wicklungsinduktivität weitergetrieben und lädt nunmehr den
Speicherkondensator auf. Durch das periodische Auf- und
Zusteuern des Halbleiterstellelementes wird der Strom während der Bremsphase immer wieder erhöht, so daß der Speicherkondensator nahezu während der vollen Bremsphase aufgeladen

M1 2 Ca / 30.09.1981

0078394

wird. Wird ein solcher Vier-Quadrantensteller von einer Batterie gespeist, so kann die Bremsenergie auch von dieser Batterie aufgenommen werden.

Durch die Ausgestaltung des Anmeldungsgegenstandes gemäß dem Merkmal des Anspruches 2 wird sichergestellt, daß ohne zusätzliche Maßnahmen der eingestellte Bremsstrom nicht überschritten wird.

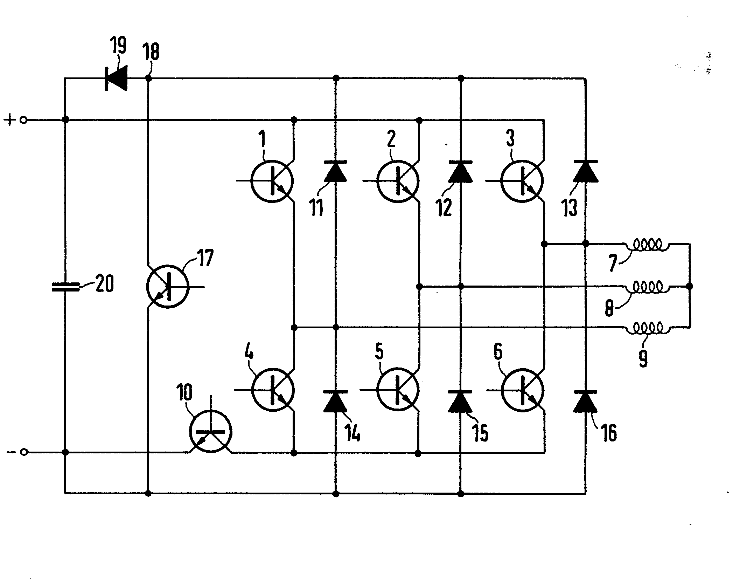

Anhand eines in der Zeichnung dargestellten Ausführungsbeispiels wird der Anmeldungsgegenstand nachfolgend näher beschrieben.

Bei dem in der Zeichnung dargestellten Vier-Quadrantensteller bilden sechs in dreiphasiger Brückenschaltung angeordnete Transistoren 1 bis 6 eine Kommutierungseinrich- tung für eine aus drei Wicklungssträngen 7 bis 9 bestehende Ständerwicklung eines kollektorlosen Gleichstrommotors. Die aus den Transistoren 1 bis 6 bestehende Brückenschaltung ist an die mit + und - bezeichneten Eingangspole des Vier- Quadrantenstellers angeschlossen. Hierbei ist in der Verbindungsleitung zwischen der Brückenschaltung und dem mit - bezeichneten Eingangspol ein Stelltransistor 10 angeordnet. Mittels dieses Stelltransistors kann der Gleichstrommotor während des motorischen Betriebes geregelt werden. Die Transistoren 1 bis 6 werden in Abhängigkeit von einem in der Zeichnung nicht dargestellten Rotorlagegeber in entsprechender Folge angesteuert, so daß durch die Wicklungsstränge 7 bis 9 ein Drehfeld erzeugt wird.

Eine aus den Dioden 11 bis 16 bestehende dreiphasige Gleichrichterbrücke ist zu den Transistoren 1 bis 6 der Kommutierungseinrichtung antiparallel an die Wicklungsstränge 7 bis 9 angeschlossen. Mit ihrem Minuspol ist diese Gleichrichterbrücke mit dem mit - bezeichneten Eingangspol des Vier- Quadrantenstellers direkt verbunden. An die beiden Pole der Gleichrichterbrücke ist als Halbleiterstellelement ein weiterer Stelltransistor 17 angeschlossen. Der Verbindungspunkt 18 dieses weiteren Stelltransistors 17 mit dem Pluspol der Gleichrichterbrücke ist über eine Entkopplungsdiode 19 an den mit + bezeichneten Eingangspol des Vier-Quadrantenstellers angeschlossen. Zwischen den beiden mit + und - bezeichneten Eingangspolen des Vier-Quadrantenstellers liegt ein Speicherkondensator 20.

Der Vier-Quadrantensteller arbeitet wie folgt: Während des motorischen Betriebes des kollektorlosen Gleichstrommotors werden die Transistoren 1 bis 6 in Abhängigkeit von einem Rotorlagegeber durchgesteuert. Der Betriebsstrom des Gleichstrommotors wird durch den Stelltransistor 10 gesteuert. Soll der an den Vier-Quadrantensteller angeschlossene Gleichstrommotor bzw. die von diesem angetriebene Last abgebremst werden, so wird der Stelltransistor 10 gesperrt und der weitere Stelltransistor 17 durchgesteuert. Von der Motor-EMK wird nunmehr über die Wicklungsstränge 7 bis 9 und die Dioden 11 bis 16 der Gleichrichterbrücke ein Kurzschlußstrom getrieben. Sobald dieser Kurzschlußstrom eine vorgegebene Höhe erreicht hat, wird der weitere Stelltransistor 17 gesperrt. Durch die Induktivität der Wicklungsstränge 7 bis 9 wird der Strom nunmehr weiter getrieben und fließt über die Entkopplungsdiode 19 in den Speicherkondensator 20.

Dem weiteren Stelltransistor 17 ist ein in der Zeichnung nicht dargestelltes Zeitglied zugeordnet, das diesen nach einer vorgegebenen Zeit wieder durchsteuert. Die Wicklungsstränge 7 bis 9 sind damit wieder kurzgeschlossen und es fließt wieder ein hoher Kurzschlußstrom. In Abhängigkeit von der Größe dieses Kurzschlußstromes wird der weitere Stelltransistor 17 daraufhin wieder zugesteuert. Durch die Induktivität der Wicklungsstränge 7 bis 9 wird dieser erhöhte Strom wieder weitergetrieben und lädt den Speicherkondensator 20 weiter auf. Das Auf- und Zusteuern des weiteren Stelltransistors 17 wird bis zum Stillstand des

0078394

Motors fortgesetzt. Das Zeitglied wird so eingestellt, daß es den weiteren Stelltransistor 17 jeweils dann wieder aufsteuert, wenn der von der Induktivität der Wicklungsstränge 7 bis 9 getriebene Strom so weit abgesunken ist, daß keine Aufladung des Speicherkondensators 20 mehr erfolgt.

Da der weitere Stelltransistor 17 jeweils dann wieder gesperrt wird, wenn der Kurzschlußstrom eine bestimmte Größe erreicht hat, ist sichergestellt, daß in dem Stromkreis kein größerer Strom als der eingestellte Bremsstrom fließen kann. Es sind daher keine weiteren Strombegrenzungsmittel erforderlich.

1 Figur
2 Patentansprüche

Patentansprüche

1. Vier-Quadrantensteller zur Steuerung einer kollektorlosen Gleichstrommaschine, der eine aus in Brückenschaltung angeordneten Halbleiterschaltelementen bestehende und mit der Ständerwicklung der Gleichstrommaschine verbindbare Kommutierungseinrichtung sowie eine gegenüber den Halbleiterschaltelementen antiparallel an die Ständerwicklung der Gleichstrommaschine anschließbare Gleichrichterbrücke aufweist, die mit mindestens einem ihrer beiden Gleichspannungspole mit dem entsprechenden einen Eingangspol des Vier-Quadrantenstellers direkt verbunden ist und bei dem zwischen seinen beiden Eingangspolen ein Speicherkonden-sator liegt, d a d u r c h   g e k e n n z e i c h n e t , daß an die beiden Gleichspannungspole der Gleichrichterbrücke (11 bis 16) ein periodisch auf- und zusteuerbares Halbleiterstellelement (17) angeschlossen und der Verbindungspunkt (18) des Halbleiterstellelementes (17) mit dem anderen Gleichspannungspol der Gleichrichterbrücke (11 bis 16) über eine Entkopplungsdiode (19) an den anderen Eingangspol (+) des Vier-Quadrantenstellers angeschlossen ist.

2. Vier-Quadrantensteller nach Anspruch 1, d a d u r c h   g e k e n n z e i c h n e t , daß das Halbleiterstell-element (17) zur Einleitung des Bremsbetriebes der Gleichstrommaschine durchgesteuert und in Abhängigkeit von dem über die Gleichrichterbrücke (11 bis 16) fließenden Kurzschlußstrom gesperrt und mittels eines Zeitgliedes für eine bestimmte Zeit im Sperrzustand gehalten ist.

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | H 02 P 3/14 |
| Y | DE-A-1 800 047 (TOKYO SHIBAURA ELECTRIC) <br> * Seite 9, Absatz 2 - Seite 10, Absatz 1 * | 1,2 | H 02 P 6/02 |
| | --- | | |
| D,Y | DE-A-2 834 523 (INDRAMAT) <br> * Seite 5, letzter Absatz - Seite 6, Absatz 2 * | 1,2 | |
| | --- | | |
| A | CH-A- 569 353 (VEB C. ZEISS) <br><br> * Spalte 1, Zeilen 33-43; Spalte 2, Zeilen 10-26 * | | |
| | ----- | | |

| RECHERCHIERTE SACHGEBIETE (Int. Cl. ³) |
|---|
| H 02 K 29/00 |
| H 02 P 3/00 |
| H 02 P 6/00 |
| H 02 P 7/00 |

Der vorliegende Recherchenbericht wurde für alle Patentansprüche erstellt.

| Recherchenort <br> BERLIN | Abschlußdatum der Recherche <br> 07-01-1983 | Prüfer <br> GESSNER E A F |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82